# DEMANDE DE BREVET EUROPEEN

(11) **EP 1 111 420 A2**
(43) Date de publication de la demande: **27.06.2001**
(21) Numéro de dépôt: 00204642.3
(22) Date de dépôt: 19.12.2000
(51) Int. Cl.: G02B 6/38

(54) **Dispositif de connexion optique**

(30) Priorité: 20.12.1999 EP 99125379
(71) Demandeur: Talltec Sensors S.A., 20009 San Sebastian (ES)
(72) Inventeur: Bouamra, Mohamed, 64500 Saint Jean de Luz (FR)
(74) Mandataire: Laurent, Jean

(57) **Abrégé**

La présente invention concerne un dispositif de connexion optique (2, 2") pour le raccordement d'une ou plusieurs fibres optiques (1a, 1b) à un circuit électrique ou électronique, ce dispositif comportant un boîtier (6, 6"), une matrice optique (12, 12', 12") portant au moins une desdites fibres optiques (1a, 1b), et un ensemble optoélectrique (16, 16', 16") pour l'émission et/ou la réception de lumière, caractérisé en ce que l'ensemble optoélectrique (16, 16', 16") est monté dans le boîtier (6, 6") et positionné de façon permanente par rapport à la matrice optique (12, 12', 12") par des moyens de positionnement (62, 66, 66') formés dans le boîtier (6, 6"), l'ensemble optoélectrique (16, 16', 16") comportant des bornes électriques (22) formant, avec une partie de boîtier (52), une prise électrique permettant une connexion séparable à une prise électrique complémentaire (4).

## Description

La présente invention concerne un dispositif de connexion optique. L'invention vise en particulier un dispositif permettant le raccordement d'un conducteur optique, tel qu'une fibre optique, à un circuit électrique ou électronique.

Un dispositif de ce type est décrit dans le brevet américain US 5,784,513. Dans ce brevet, un module optoélectronique comporte un circuit imprimé connecté à deux diodes pour la transmission et la réception de signaux de lumière respectivement et un boîtier dans lequel sont logés ces composants. Des bornes électriques montées sur le circuit électronique projettent du boîtier pour le montage et la connexion électrique permanente du module sur un circuit imprimé extérieur, par exemple d'une boîte de commande et d'alimentation. Le module comporte en outre une prise optique pour un raccordement séparable à des fibres optiques.

Le raccordement des fibres optiques à des composants optoélectroniques ou à d'autres fibres optiques nécessite une grande précision d'alignement dans la mesure où le diamètre du coeur d'une fibre optique est très faible, typiquement de l'ordre de 1 à 15 µm pour une fibre monomode, et de 50 à 100 µm pour une fibre multimode. Pour cette même raison, les faces optiques doivent être protégées de la poussière et d'autres saletés. D'autre part, les prises optiques émettrices de lumière doivent souvent être munies de moyens de sécurité pour les utilisateurs en raison des dangers des faisceaux laser pour l'oeil. Les contraintes précitées ont une influence négative sur le coût, la fiabilité et la compacité des dispositifs de connexion optique.

Compte tenu de ces inconvénients, un but de l'invention est de réaliser un dispositif de connexion optique fiable et peu coûteux pour raccorder de façon séparable un conducteur optique, tel qu'une fibre optique, à un circuit électrique ou électronique.

A cet effet, la présente invention concerne un dispositif de connexion optique pour le raccordement d'un ou plusieurs conducteurs optiques à un circuit électrique ou électronique, ce dispositif comportant un boîtier, une matrice optique portant au moins un conducteur optique, et un ensemble optoélectrique pour l'émission et/ou la réception de lumière, caractérisé en ce que l'ensemble optoélectrique est monté dans le boîtier et positionné par rapport à la matrice optique par des moyens de positionnement formés dans le boîtier, l'ensemble optoélectrique comportant des bornes électriques formant, avec une partie de boîtier, une prise électrique permettant une connexion séparable à une prise électrique complémentaire.

Grâce à ces caractéristiques, le montage permanent des fibres et composants optoélectroniques dans le boîtier du dispositif de connexion permet d'assurer un bon alignement des éléments optiques et une réduction de la sensibilité du dispositif à la sollicitation mécanique et aux vibrations. En outre, les opérations d'assemblage des éléments optiques peuvent être facilement automatisées, ce qui permet de réduire sensiblement les coûts de production. L'invention permet aussi de réaliser une connexion optique très compacte, notamment parce que les fibres optiques ne nécessitent pas de structure encombrante telle qu'une férule d'alignement et un système de verrouillage amovible.

L'ensemble optoélectrique peut comporter, pour chaque voie de communication optique, un composant optoélectronique pour l'émission et/ou la réception de lumière, par exemple une diode pour l'émission de lumière et une diode ou photodétecteur pour la réception de lumière. Les composants et les bornes électriques peuvent avantageusement être montés sur un support unique, de préférence une plaque de circuit imprimé qui est munie de pistes conductrices pour connecter les bornes aux composants.

Le boîtier comporte de préférence un socle portant la matrice optique ainsi que les fibres optiques, le socle étant muni desdits moyens de positionnement, et un couvercle qui se monte sur le socle pour la fermeture du boîtier.

Les moyens de positionnement comportent de préférence des glissières pour guider l'insertion de l'ensemble optoélectrique dans le socle.

Le boîtier peut comporter une paroi d'isolation optique disposée entre deux fibres optiques à la hauteur de l'interface de couplage entre les fibres optiques et l'ensemble optoélectrique. Le couplage entre les voies optiques par réflexion ou diffusion de lumière est ainsi évité.

La matrice optique peut comporter une première partie de matrice munie de rainures pour le positionnement des fibres optiques, et une autre partie ou plaque destinée à être fixée par des moyens de fermeture, tels que des clips élastiques, à la première partie pour rendre les fibres optiques solidaires de la matrice optique. Au lieu d'être une pièce séparée, la première partie de matrice peut aussi être moulée intégralement avec le socle du boîtier. Après montage des fibres optiques dans la matrice optique, une partie frontale est séparée de la matrice par une opération de sciage. Cette opération suffit pour la plupart des applications et permet de réduire les coûts de fabrication du dispositif, mais au besoin une brève opération de polissage de la face optique permet d'atteindre une qualité de surface équivalent à une surface parfaitement clivée.

Pour certaines applications nécessitant un signal optique de référence, par exemple dans les applications concernant des capteurs à fibres optiques, le dispositif de connexion optique peut être muni de moyens de courbure de la fibre optique émettrice et de moyens de détection pour détecter la perte de lumière due à cette courbure. Une solution très simple consiste à prévoir un orifice dans la matrice optique au travers duquel passe librement une partie de la fibre optique émettrice et un picot projetant du couvercle. Lors du montage, le picot est inséré dans l'orifice, de sorte que la partie de fibre optique traversant l'orifice est pressée en direction du socle. La courbure ainsi effectuée engendre la perte d'une partie de la lumière injectée dans la fibre optique. Pour mesurer cette perte, un photodétecteur peut être monté dans une cavité pratiquée dans le socle en regard de l'orifice. La lumière perdue par courbure est en fait caractéristique de la lumière injectée, de sorte que le signal de sortie du photodétecteur constitue une référence et permet de tenir compte des fluctuations de la puissance optique injectée dans la fibre optique.

D'autres caractéristiques et avantages de la présente invention apparaîtront plus clairement à la lecture de la description détaillée qui suit d'un mode de réalisation du dispositif de connexion optique selon l'invention, cet exemple étant donné à titre purement illustratif et non limitatif en liaison avec les dessins annexés dans lesquels :
- la figure 1 est une vue en perspective d'une dispositif de connexion optique selon l'invention;
- la figure 2 est une vue en perspective d'un connecteur électrique complémentaire pouvant s'accoupler avec le dispositif de connexion optique selon l'invention;
- la figure 3 est une autre vue en perspective du dispositif de connexion optique selon l'invention;
- la figure 4 est une vue en perspective d'un socle du boîtier du dispositif de connexion optique selon l'invention;
- la figure 5 est une vue en perspective d'un couvercle du boîtier;
- la figure 6 est une vue en perspective d'un support de fibres optiques du dispositif de connexion optique selon l'invention;
- la figure 7 est une vue en perspective d'une matrice optique du dispositif de connexion optique selon l'invention;
- la figure 8 est une vue en perspective d'une partie de la matrice;
- la figure 9 est une vue en perspective de la matrice avant découpe de l'extrémité;
- la figure 10 est une vue en perspective d'un ensemble optoélectrique du dispositif de connexion optique selon l'invention;
- la figure 11 est une vue éclatée en perspective de l'ensemble optoélectrique;
- la figure 12 est une vue en perspective d'une autre forme d'exécution d'un ensemble optoélectrique;
- la figure 13 est une vue d'un socle incorporant une partie de matrice optique d'une deuxième forme d'exécution d'un dispositif de connexion optique selon l'invention;
- la figure 14 est une vue en coupe selon la ligne 14-14 de la figure 13;
- la figure 15 est une vue selon la flèche 15 de la figure 13;
- la figure 16 est une vue en perspective d'un couvercle du boîtier de la deuxième forme d'exécution du dispositif de connexion optique selon l'invention;
- la figure 17 est une vue en coupe selon la ligne 17-17 de la figure 16;
- la figure 18 est une vue selon la flèche 18 de la figure 17;
- la figure 19 est une vue en perspective d'une troisième forme d'exécution d'un dispositif de connexion optique selon l'invention;
- la figure 20 est une vue éclatée en perspective de la troisième forme d'exécution du dispositif de connexion optique selon l'invention;
- la figure 21 est une vue en perspective d'un socle du boîtier de la troisième forme d'exécution du dispositif de connexion optique selon l'invention;
- la figure 22 est une vue en perspective d'un couvercle du boîtier de la troisième forme d'exécution du dispositif de connexion optique selon l'invention;
- la figure 23 est une vue en perspective d'une matrice optique de la troisième forme d'exécution du dispositif de connexion optique selon l'invention, et
- la figure 24 est une vue en perspective d'une partie de la matrice optique de la troisième forme d'exécution du dispositif de connexion optique selon l'invention.

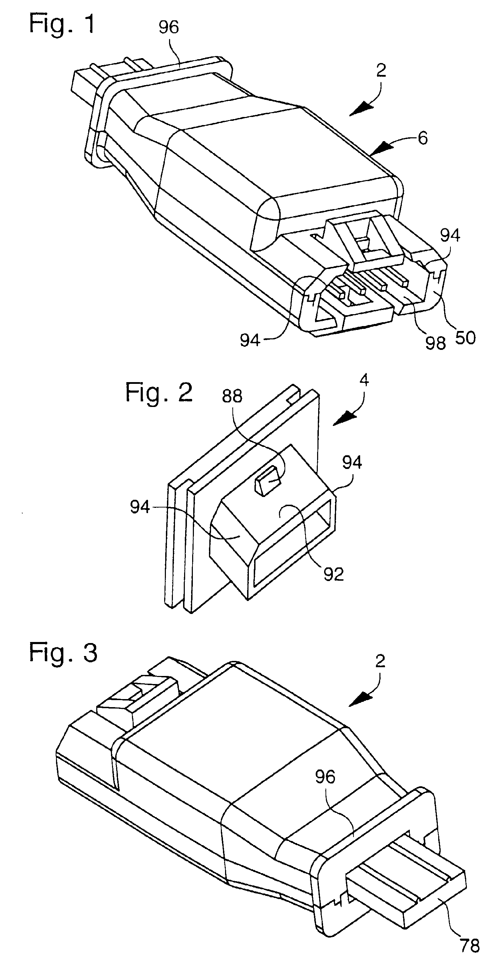

Les figures 1 à 11 montrent un dispositif de connexion optique 2 pouvant s'accoupler de façon séparable à une prise électrique 4 pour permettre le raccordement d'une ou plusieurs fibres optiques à un circuit électrique. Par le terme circuit électrique on entend un circuit électrique ou électronique sans limitation particulière, ce circuit permettant par exemple le traitement de signaux électriques ou la retransmission de signaux par voie optique ou électrique.

Le dispositif de connexion comporte un boîtier 6 comprenant un socle optique 8 et un couvercle 10, une matrice optique 12 formée par deux parties de matrice 14, et un ensemble optoélectrique 16.

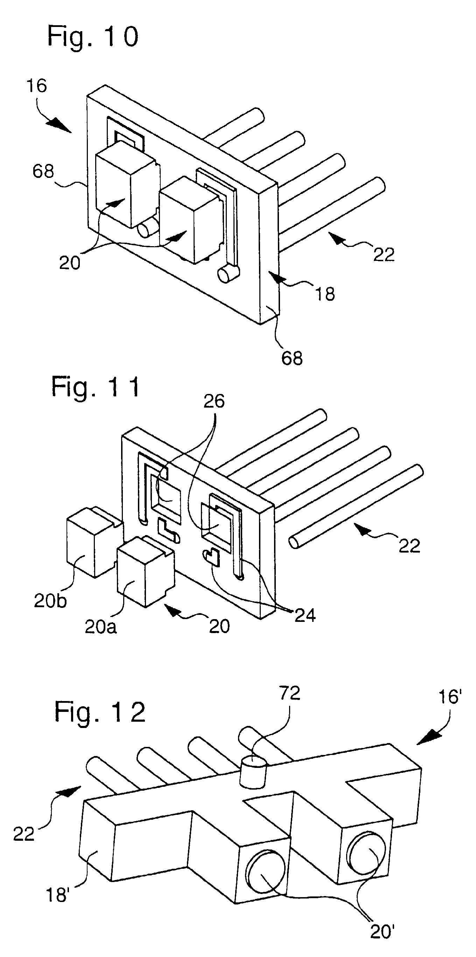

L'ensemble optoélectrique montré dans les figures 11 et 12 comprend un support 18, un ou plusieurs composants optoélectroniques 20 pour la transmission et/ou la réception de signaux de lumière, et des bornes électriques 22 telles que des broches permettant une connexion séparable à des bornes électriques complémentaires du connecteur électrique 4. Le support 18 peut être constitué par un circuit imprimé ayant des pistes conductrices 24 pour l'interconnexion des composants optoélectroniques aux bornes électriques. Le circuit imprimé peut en outre être muni de cavités 26 pour la fixation et le positionnement précis des composants optoélectroniques sur le support 18. Les composants optoélectroniques 20 peuvent êtres des photodétecteurs ou des diodes d'émission et/ou de réception de lumière couramment désignées par l'acronyme anglais LED (Light Emitting Diode). Ces composants peuvent êtres de type SMD (Surface Mounted Device) adaptés au montage en surface par soudure pour permettre leur connexion aux pistes conductrices 24. Dans la forme d'exécution illustrée, il y a quatre bornes électriques 22, une paire de bornes étant connectée aux pôles d'une première diode 20a et l'autre paire étant connectée aux pôles d'une deuxième diode 20b. La première diode 20a sert, par exemple, à l'émission de lumière, alors que l'autre diode 20b sert à la réception de lumière pour permettre une connexion d'émission et de réception par fibres optiques 1a, 1b séparées dite Full Duplex. Bien entendu, d'autres configurations dépendant, entre autres, du système de communication et des normes utilisés sont possibles sans sortir du cadre de l'invention. Dans la figure 12, une autre forme d'exécution d'un ensemble optoélectrique 16' est montrée, selon laquelle les composants optoélectroniques 20' et les bornes électriques 22 sont surmoulés par le support 18'. Selon encore une autre variante de réalisation non représentée, la partie active des composants optoélectroniques est fixée sur un support et reliée électriquement aux bornes électriques 22 selon la technique de montage hybride desdits composants bien connue de l'homme du métier. Selon encore une autre variante, les composants optoélectroniques 20' et les bornes électriques 22 sont sertis dans le support 18'.

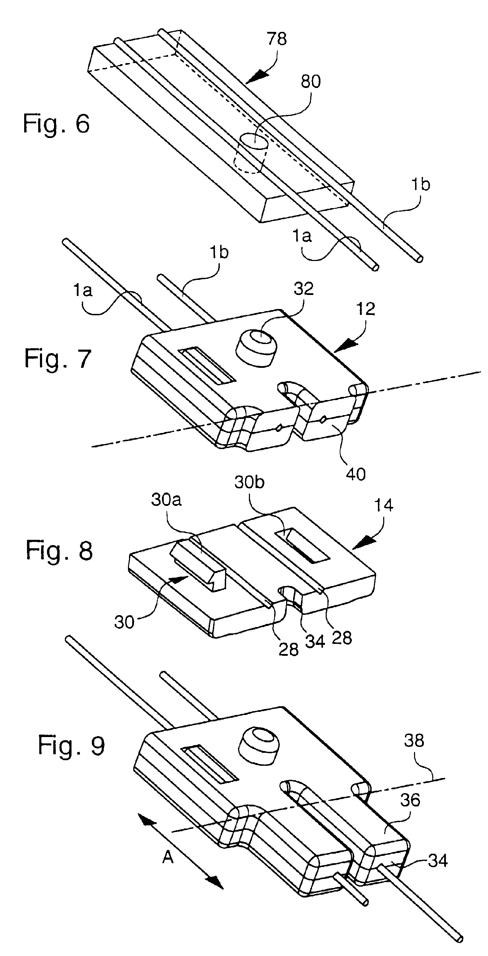

La matrice optique 12 illustrée dans les figures 7 à 9 est constituée de deux parties de matrice 14 complémentaires réalisées, par exemple, en un matériau plastique injecté. Chaque partie de matrice 14 comporte :
- une ou plusieurs rainures 28 ayant, par exemple, un profil en forme de V pour le positionnement précis et la fixation des fibres optiques 1a, 1b;
- des moyens de fermeture 30 tels qu'un clip 30a et un passage de clip complémentaire 30b;
- un élément de centrage 32, et
- un passage de paroi d'isolation optique 34 disposé entre les rainures 28.

Pour le montage, les fibres optiques 1a, 1b munies ou non de leur revêtement sont placées dans les rainures 28, entre les deux parties de matrice 14 qui sont ensuite fixées ensemble par encliquetage des clips 30a dans les passages 30b, ou par d'autres moyens tels que par collage ou par soudure aux ultrasons. Les bouts des fibres optiques 1a, 1b peuvent dépasser l'extrémité d'une partie frontale 36 de la matrice 12. La matrice 12 est ensuite présentée devant une scie de haute précision, par exemple du type de celles utilisées pour la découpe des semi-conducteurs, et coupée selon une ligne de découpe 38 qui sépare la matrice optique 12 de la partie frontale 36. La position de la ligne de découpe 38 dans la direction axiale (A), c'est à dire dans la direction des fibres optiques 1a et 1b, par rapport à l'élément de centrage 32 est définie de sorte que la face optique 40, et donc les extrémités des fibres optiques 1a, 1b, soient positionnées très près des composants optoélectroniques 20a, 20b respectifs après montage dans le boîtier 6. La finition de surface résultant de cette opération de découpe permet d'atteindre, pour une fibre multimode en silice de 200 □m, un rendement à l'injection de lumière d'environ 75% par rapport à une surface parfaitement conditionnée. Cette opération suffit pour la plupart des applications, et permet de réduire les coûts de fabrication du dispositif de connexion optique 2 selon l'invention. Au besoin, une brève opération de polissage de la face optique 40 permet d'atteindre une qualité de surface équivalent à une surface parfaitement clivée. Il est à noter que beaucoup de diodes LED disponibles sur le marché sont munies d'une lentille en forme de dôme sensiblement sphérique ou partiellement tronqué. A l'usage, il s'avère toutefois avantageux d'enlever ce dôme, par exemple par abrasion et polissage, pour rapprocher l'extrémité de la fibre optique 1a, 1b de la partie active émettrice ou réceptrice de la diode. Ces modifications ont pour effet d'augmenter considérablement le rendement d'émission ou de réception de lumière.

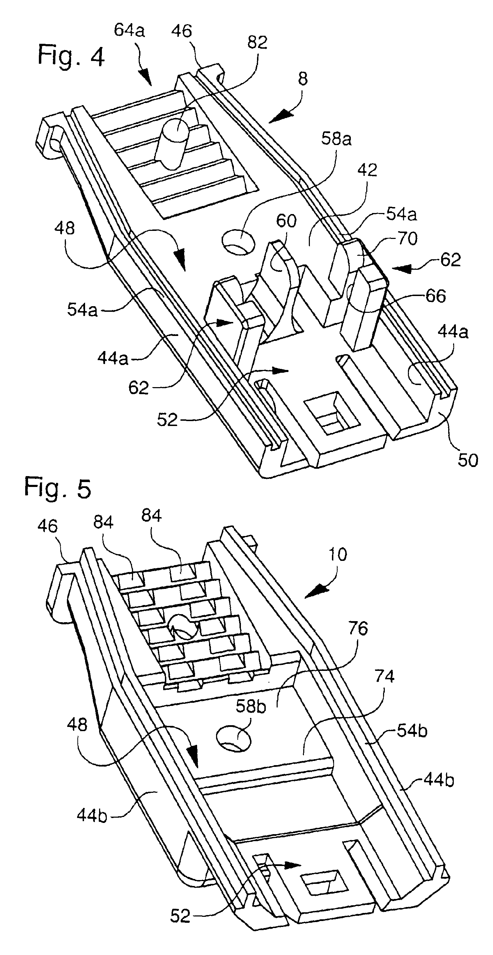

Comme illustré dans la figure 4, le socle optique 8 comporte une paroi de fond 42 et des parois latérales 44a qui s'étendent entre une extrémité 46 d'une partie optique 48 du dispositif et une extrémité 50 d'une partie électrique 52 du dispositif. Les bords libres des parois latérales 44a comportent une gouttière de fermeture 54a destinée à être insérée dans une gouttière 54b complémentaire du couvercle 10 pour une fermeture étanche desdites parois latérales 44a. Le socle 8 comprend en outre un élément de centrage 58a, une paroi d'isolation optique 60, des moyens de guidage 62 et une partie de mors 64a. L'élément de centrage 58a est complémentaire à l'élément de centrage 32 de la matrice optique 12, en l'occurrence un orifice complémentaire à la butée cylindrique 32 de ladite matrice optique 12, et permet de positionner cette matrice optique 12 de façon précise dans le socle 8. La paroi d'isolation optique 60 s'enfile en partie dans le passage 34 de la matrice 12 et sert à isoler optiquement les voies optiques les unes des autres, notamment pour éviter le couplage entre les voies par lumière réfléchie ou diffusée à l'interface des fibres optiques 1a, 1b et des composants optoélectroniques 20. La paroi d'isolation 60 peut subsidiairement servir à bloquer et donc à positionner la matrice optique 12 en rotation. Les moyens de guidage 62 servent à guider et à positionner, de façon précise, l'ensemble optoélectrique 16 dans le socle 8, et donc par rapport à la matrice optique 12. Dans cet exemple, les moyens de guidage 62 consistent en deux glissières 66 disposées de part et d'autre de l'axe central du socle 8. Les glissières 66 peuvent être dimensionnées de façon à ce qu'elles engagent les bords 68 du support 18 avec un faible jeu, mais il est aussi possible de prévoir un léger blocage et d'enfiler l'ensemble optoélectronique 16 dans le socle 8 en appliquant une force adéquate. Les glissières 66 sont munies d'une entrée en forme d'entonnoir 70 pour faciliter l'insertion de l'ensemble optoélectronique 16. Les moyens de guidage 62 peuvent revêtir d'autres formes telles que, par exemple, un orifice (non représenté) pratiqué dans la paroi de fond 42 pour s'accommoder aux moyens complémentaires du support 18 tels qu'un picot 72 (figure 12). Il va de soi que, selon une variante de réalisation simplifiée de l'invention, le support 18, 18', non encore muni des composants optoélectroniques, mais comportant les connexions 22, est directement moulé avec la partie inférieure du boîtier.

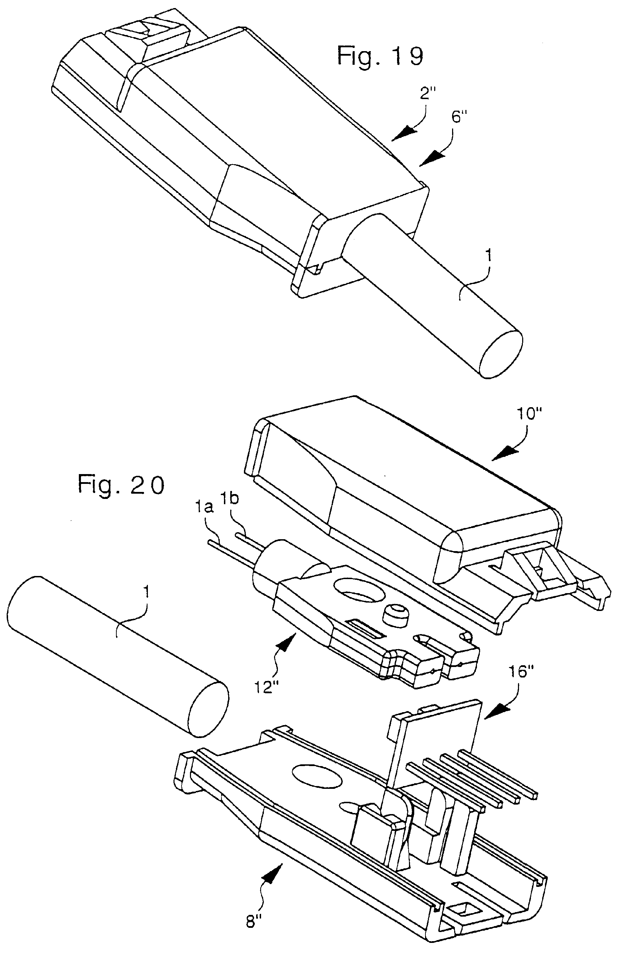

Comme illustré dans la figure 5, le couvercle 10 comporte une paroi de fond 74 et des parois latérales 44b qui s'étendent, comme pour le socle 8, entre l'extrémité 46 de la partie optique 48 du dispositif et l'extrémité 50 de la partie électrique 52 du dispositif. Le couvercle 10 comprend en outre un élément de centrage 58b et une partie de mors 64b. L'élément de centrage 58b se présente sous la forme d'un orifice et a la même fonction que l'élément de centrage 58a du socle optique 8, c'est à dire recevoir une butée de centrage de la matrice optique 12, mais du côté opposé de celle-ci. La paroi de fond 74 comporte, à l'emplacement de la matrice optique 12, un plateau 76 dimensionné de façon à ce que la matrice optique 12 soit pincée entre la paroi de fond 42 du socle 8 et le plateau 76 sans jeu ou avec un minimum de jeu. Les parties de mors 64a, 64b ont une structure en dents de scie pour mordre dans la gaine de protection entourant le câble à fibres optiques et ainsi retenir ce câble au dispositif de connexion 2 contre les efforts de traction. Le câble peut avoir différentes constructions. Il peut, par exemple, avoir une section circulaire (tel que le câble 1 montré dans les figures 19 et 20), ovale ou plate et contenir une ou plusieurs fibres optiques. Les fibres optiques 1a, 1b peuvent aussi être montées à l'entrée de la partie optique 48 du dispositif, sur un support 78 en forme de bande plate présentant des rainures pour le positionnement des fibres optiques libérées de leur gaine de protection, et un orifice de retenue 80 qui reçoit une butée de retenue complémentaire 82 prévue sur le socle 8 ou le couvercle 10. Les fibres optiques 1a, 1b peuvent être collées sur la bande 78 ou, par exemple, fixées par surmoulage d'un matériau plastique. La partie de mors 64b du couvercle 10 est munie de deux rainures étroites 84 traversant les dents de scie pour permettre le passage des fibres optiques 1a, 1b fixées sur le support 78. S'il y a deux câbles à fibre optique unique, ces rainures peuvent aussi servir à positionner les câbles et à améliorer leur retenue du fait que les coins des dents pénètrent dans la gaine des câbles.

Le montage du dispositif de connexion optique 2 selon l'invention peut être effectué conformément aux opérations suivantes. Les fibres optiques sont, le cas échéant, dénudées sur une certaine longueur et montées sur la matrice optique 12 tel que décrit ci-dessus, de sorte que la gaine du câble optique ou le support 78 se trouve dans la région des mors 64a, 64b après montage de la matrice 12 dans le socle 8. L'ensemble optoélectrique 16 est ensuite monté dans le socle 8 en insérant la plaque de support 18 entre les glissières 66. En fin de course d'insertion, les composants optoélectroniques 20a, 20b sont alignés avec l'extrémité des fibres optiques correspondantes. Comme déjà mentionné, il est avantageux que les parties actives des composants optoélectroniques 20a, 20b soient très près de l'extrémité des fibres optiques 1a, 1b correspondantes pour avoir un bon rendement d'émission ou de réception, ce qui peut être assuré par le positionnement précis de ces éléments par les moyens de centrage du socle 58a, 60, 66 et des éléments correspondants 32, 34, 68, d'autant plus que la partie optique du dispositif après montage est fixe et non-séparable. Ensuite, le couvercle 10 est monté sur le socle 8 et fixé par emboîtement, collage, soudage aux ultrasons, ou par d'autres moyens conventionnels tels que des clips de fixation (non représentés). Une gaine thermorétractable peut être montée autour du câble optique à l'entrée du dispositif de connexion 2 et d'un rebord 96, prévu à cet effet, pour assurer l'étanchéité et renforcer la résistance à la traction et au pliage du câble. Il est à noter que les bornes électriques 22 se trouvent à l'intérieur de la cavité 98 de la partie électrique du boîtier 6 et ne dépassent pas l'extrémité 50, de sorte qu'elles sont bien protégées par le boîtier 6.

Comme illustré dans les figures 1 et 3 à 5, le boîtier 6 comporte des moyens de verrouillage 86 pour verrouiller le dispositif de connexion optique 2 au connecteur électrique 4 qui comporte des moyens de verrouillage complémentaires 88. Dans l'exemple illustré, les moyens de verrouillage consistent en des clips élastiques, avec des ouvertures formées dans la paroi de fond du couvercle 10 et du socle 8 respectivement, et des protubérances 90 complémentaires sur le connecteur électrique 4. Pour assurer une orientation de raccordement correcte, l'interface 92 entre le connecteur électrique 4 et le dispositif de connexion optique 2 présente une forme asymétrique, notamment par la réalisation de surfaces inclinées 94 aux coins d'un côté du connecteur électrique 4 et du dispositif de connexion optique 2 respectivement.

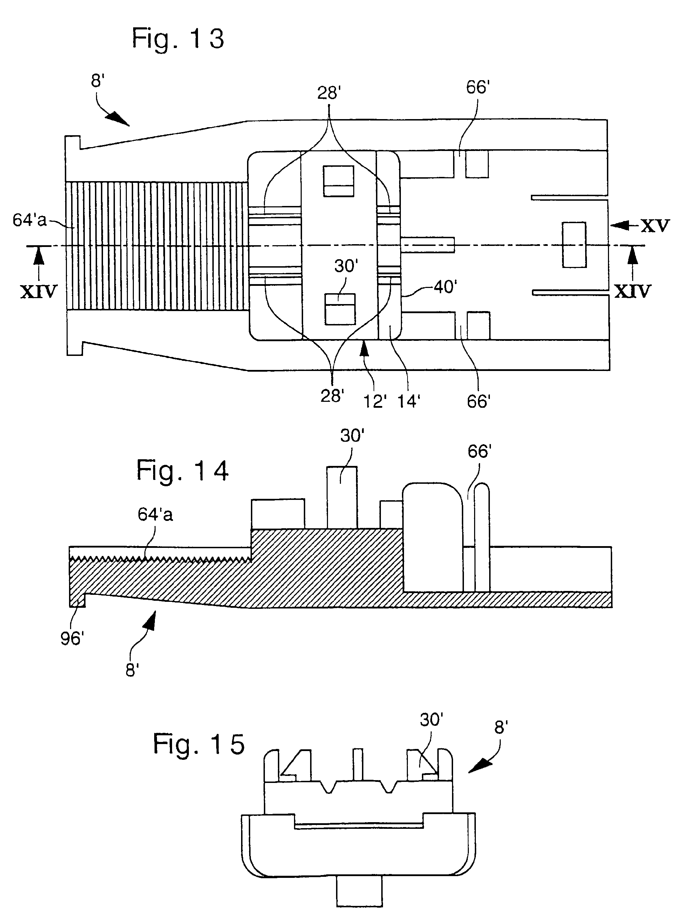

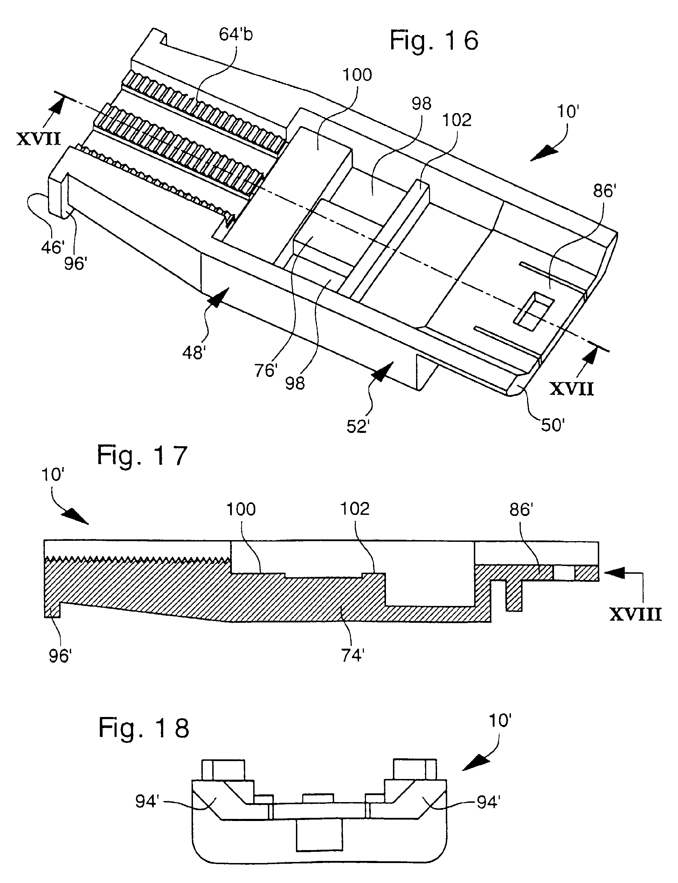

Dans les figures 13 à 18 une deuxième forme d'exécution d'un dispositif de connexion optique selon l'invention est montrée. Les parties identiques ou analogues aux parties déjà décrites en rapport avec la première forme d'exécution sont indiquées avec le même numéro de référence mais en ajoutant une apostrophe. Pour mieux comprendre la fonction des parties analogues, référence peut être faite à la description de la première forme d'exécution, de sorte que la description qui suit se concentre principalement sur les différences importantes entre cette forme d'exécution et la précédente. Le dispositif de connexion optique comporte un socle 8', un couvercle 10', une matrice optique 12' et un ensemble optoélectrique qui peut être identique à celui décrit en rapport avec les figures 10 et 11. Contrairement à la forme d'exécution précédente, une partie 14' de la matrice optique 12' est solidaire du socle 8'. L'autre partie (non représentée) est une pièce séparée se présentant, par exemple, sous la forme d'une plaque ayant des moyens de verrouillage complémentaires aux moyens de verrouillage de la partie de matrice 14', en l'occurrence des clips élastiques 30'. La plaque peut aussi être soudée ou collée pour augmenter la stabilité de fixation des fibres optiques. La partie de matrice 14' est moulée intégralement avec le socle 8' et est munie de rainures 28' pour positionner les fibres optiques avant d'être fixés par la plaque de verrouillage. Après montage des fibres optique et de la plaque de verrouillage, les extrémités des fibres dépassant la face optique 40' de la matrice optique 12' sont clivées ou sciées et, au besoin, polies au moyen d'outils adaptés à la géométrie du socle 8'. Le socle 8' comporte en outre une paroi d'isolation optique 60' pour isoler les deux voies optiques, et des glissières 66' pour guider et positionner l'ensemble optoélectrique. On peut facilement reconnaître d'autres aspects du socle 8' et du couvercle 10' similaires aux aspects déjà décrits pour la première forme d'exécution tels que les rebords 96', les clips de verrouillage 86', les parties de mors 64'a, 64'b et la forme asymétrique 94' de la partie électrique 52'.

Le couvercle 10' comporte une paroi de fond 74' et des parois latérales 44'b qui s'étendent, comme pour le socle 8', entre l'extrémité 46' de la partie optique 48' et l'extrémité 50' de la partie électrique 52'. Sur la paroi de fond 74', un plateau 76' est dimensionné de façon à ce que la plaque de la matrice optique 12' soit pincée entre la partie de matrice 14' du socle 8' et ledit plateau 76'. Les dégagements 98' de part et d'autre du plateau 76' servent à accommoder les moyens de verrouillage 30'. Le couvercle 10' peut aussi être muni de plates-formes 100 et 102 servant à la fixation des fibres contre la partie de matrice 14' en sus de la plaque séparée de la matrice optique 12'.

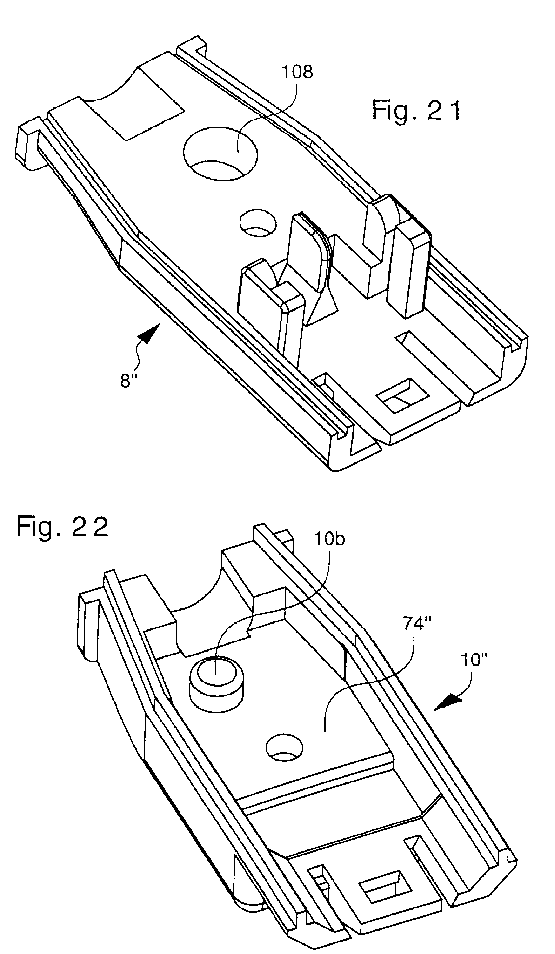

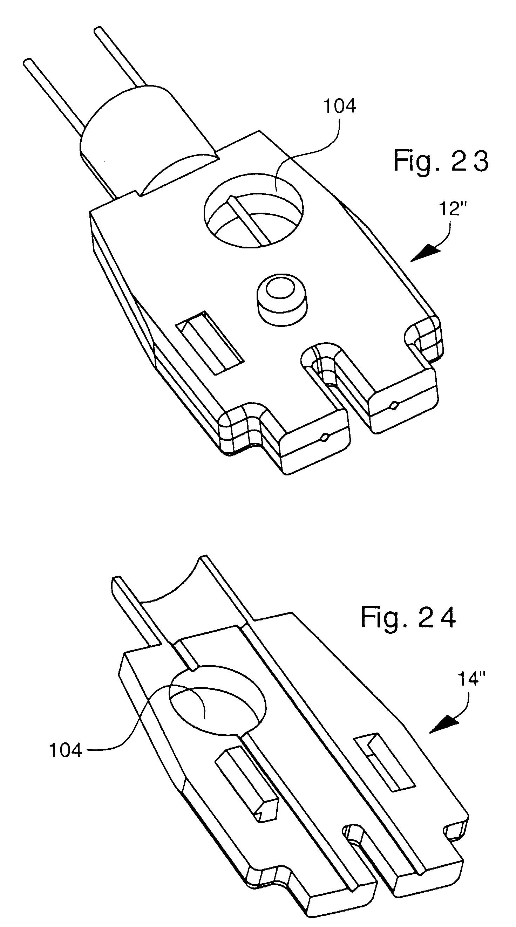

Dans les figures 19 à 24 une troisième forme d'exécution d'un dispositif de connexion optique selon l'invention est montrée. Les parties identiques ou analogues aux parties déjà décrites en rapport avec la première forme d'exécution sont indiquées avec le même numéro de référence mais en ajoutant une double apostrophe. Pour mieux comprendre la fonction des parties analogues, référence peut être faite à la description de la première forme d'exécution, de sorte que la description qui suit se concentre principalement sur les différences importantes entre cette forme d'exécution et la première. Le dispositif de connexion optique comporte un socle 8", un couvercle 10", une matrice optique 12" et un ensemble optoélectrique 16". Les différences qui sont décrites dans ce qui suit résultent du fait que cette forme d'exécution est adaptée à l'utilisation dans des applications nécessitant un signal optique de référence, par exemple dans les applications concernant des capteurs à fibres optiques, notamment en raison de la dérive du signal optique qui peut survenir sous l'effet de variations de température ou du vieillissement des composants. A cet effet, le dispositif de connexion optique 2" est muni de moyens de courbure 104, 106 de la fibre optique émettrice 1b et de moyens de détection pour détecter la perte de lumière due à cette courbure. Les moyens de courbure comprennent un orifice 104 dans la matrice optique au travers duquel passe librement une partie de la fibre optique émettrice 1b et un picot 106 projetant de la paroi de fond 74" du couvercle 10". Lors du montage, le picot 106 est inséré dans l'orifice 104 de sorte que la partie de fibre optique traversant l'orifice 104 est pressée en direction du socle 8". La courbure ainsi effectuée engendre la perte d'une partie de la lumière injectée dans la fibre optique 1b. Pour mesurer cette perte, un photodétecteur peut être monté dans une cavité 108 pratiquée dans le socle 8" en regard de l'orifice 104. La lumière perdue par courbure est en fait caractéristique de la lumière injectée, de sorte que le signal de sortie du photodétecteur constitue une référence et permet de tenir compte de fluctuations de puissance optique injectée dans la fibre optique.

Il va de soi que diverses modifications et variantes simples entrent dans le cadre de la présente invention.

## Revendications

1. Dispositif de connexion optique (2, 2") pour le raccordement d'une ou plusieurs fibres optiques (1a, 1b) à un circuit électrique ou électronique, ce dispositif comportant un boîtier (6, 6"), une matrice optique (12, 12', 12") portant au moins une desdites fibres optiques (1a, 1b), et un ensemble optoélectrique (16, 16', 16") pour l'émission et/ou la réception de lumière, caractérisé en ce que l'ensemble optoélectrique (16, 16', 16") est monté dans le boîtier (6, 6") et positionné de façon permanente par rapport à la matrice optique (12, 12', 12") par des moyens de positionnement (62, 66, 66') formés dans le boîtier (6, 6"), l'ensemble optoélectrique (16, 16', 16") comportant des bornes électriques (22) formant, avec une partie de boîtier (52), une prise électrique permettant une connexion séparable à une prise électrique complémentaire (4).

2. Dispositif selon la revendication 1, caractérisé en ce que l'ensemble optoélectrique (16, 16', 16") comporte, pour chaque voie de communication optique, un composant optoélectronique (20, 20') pour l'émission et/ou la réception de lumière, les composants optoélectroniques (20, 20') étant connectés aux bornes électriques (22), les composants (20, 20') et les bornes électriques étant montés sur un support (18, 18').

3. Dispositif selon la revendication 2, caractérisé en ce que le support (18, 18') est une plaque de circuit imprimé.

4. Dispositif selon la revendication 2, caractérisé en ce que les composants optoélectroniques (20') et les bornes électriques (22) sont surmoulés par le support (18').

5. Dispositif selon la revendication 2, caractérisé en ce que les composants optoélectroniques (20') et les bornes électriques (22) sont sertis dans le support (18').

6. Dispositif selon la revendication 2, caractérisé en ce que la partie active des composants optoélectroniques est fixée sur un support et reliée électriquement aux bornes électriques (22) selon la technique de montage hybride.

7. Dispositif selon l'une quelconque des revendications 1 ou 2, caractérisé en ce que l'ensemble optoélectrique (16, 16', 16") comporte au moins deux composants optoélectroniques (20, 20'), une diode pour l'émission de lumière et une diode ou photodétecteur pour la réception de lumière.

8. Dispositif selon la revendication 7, caractérisé en ce que les diodes (20, 20') sont du type SMD adaptées au montage en surface par soudure.

9. Dispositif selon l'une quelconque des revendications 7 ou 8, caractérisé en ce que la partie active émettrice ou réceptrice des diodes (20, 20') affleurent l'extrémité des fibres optiques (1a, 1b).

10. Dispositif selon la revendication 9, caractérisé en ce que les diodes (20, 20') sont munies d'une lentille en forme de dôme sensiblement sphérique ou partiellement tronqué qui est enlevée par abrasion et polissage.

11. Dispositif selon l'une quelconque des revendications précédentes, caractérisé en ce que le support (18, 18'), non encore muni des composants optoélectroniques, mais comportant les connexions (22), est directement moulé avec la partie inférieure du boîtier.

12. Dispositif selon l'une quelconque des revendications 1 à 10, caractérisé en ce que le boîtier (6, 6") comporte un socle (8, 8', 8") muni des moyens de positionnement (62, 66, 66') et portant la matrice optique (12, 12', 12") ainsi que les fibres optiques (1a, 1b), et un couvercle (10, 10', 10") qui se monte sur le socle (8, 8', 8") pour la fermeture du boîtier (6, 6").

13. Dispositif selon la revendication 12, caractérisé en ce que les moyens de positionnement (62, 66, 66') comportent des glissières (66, 66') permettant l'insertion de l'ensemble optoélectrique (16, 16', 16") dans le socle (8, 8', 8").

14. Dispositif selon l'une quelconque des revendications 12 ou 13, caractérisé en ce que le socle (8, 8', 8") et/ou le couvercle (10, 10', 10") comportent des parties de mors (64a, 64b, 64'a, 64'b) destinées à pincer les fibres optiques à l'entrée du dispositif pour les retenir au boîtier (6, 6") contre des forces de traction.

15. Dispositif selon l'une quelconque des revendications précédentes, caractérisé en ce que le boîtier (6, 6") comporte une paroi d'isolation optique (60, 60') disposée entre deux fibres optiques à la hauteur de l'interface de couplage entre les fibres optiques et l'ensemble optoélectrique (16, 16', 16").

16. Dispositif selon l'une quelconque des revendications précédentes, caractérisé en ce que la matrice optique (12, 12', 12") comporte une première partie de matrice (14, 14') munie de rainures (28, 28') pour le positionnement des fibres optiques (1a, 1b), et une autre partie (14) ou plaque destinée à être fixée par des moyens de fermeture (30, 30') à la première partie pour rendre les fibres optiques (1a, 1b) solidaires de la matrice optique (12, 12', 12").

17. Dispositif selon l'une quelconque des revendications précédentes, caractérisé en ce que la matrice optique (12, 12', 12") et les fibres optiques (1a, 1b) ont une face optique (40) résultant d'une opération de sciage séparant la matrice optique (12, 12', 12") d'une partie frontale (36).

18. Dispositif selon l'une quelconque des revendications précédentes, caractérisé en ce que la matrice optique (12, 12', 12") comporte un passage de paroi d'isolation optique (34).

19. Dispositif selon l'une quelconque des revendications précédentes, caractérisé en ce que la matrice optique (12, 12', 12") comporte un élément de centrage (32) et en ce que le boîtier comporte un élément de centrage (58a, 58b) complémentaire pour le positionnement de la matrice optique (12, 12', 12") dans le boîtier (6, 6").

20. Dispositif selon l'une quelconque des revendications précédentes, caractérisé en ce que la matrice optique (12, 12', 12") est munie de moyens de courbure (104, 106) d'une fibre optique (1b) et de moyens de détection pour détecter la perte de lumière due à cette courbure.

21. Dispositif selon la revendication 18, caractérisé en ce que les moyens de courbure (104, 106) comprennent un orifice (104) dans la matrice optique (12, 12', 12") au travers duquel passe librement une partie de la fibre optique (1b) et un picot (106) projetant d'un couvercle (10") du boîtier qui est inséré dans l'orifice et qui appuie sur ladite partie de fibre.

22. Dispositif selon la revendication 16, caractérisé en ce que la première partie de matrice (14') est moulée intégralement avec un socle (8') du boîtier.
